# EUROPEAN PATENT SPECIFICATION

(11) **EP 0 769 573 B1**
(45) Date of publication and mention of the grant of the patent: **22.03.2000**
(21) Application number: 96305813.6
(22) Date of filing: 07.08.1996
(51) Int. Cl.: C23F 11/14, C23F 11/08, C23F 11/10, C09K 5/00

(54) **Process for reducing aluminium corrosion and use of a corrosion inhibitor in antifreeze compositions**
Verfahren zur Korrosionsverminderung von Aluminium und Verwendung eines Korrosionsinhibitors in Frosschutzmitteln
Agent anticorrosion et composition d'antigel le contenant

(30) Priority: 28.08.1995 FR 9510319
(43) Date of publication of application: 23.04.1997
(73) Proprietor: BP Chemicals Limited, London EC2M 7BA (GB); BP CHEMICALS S.N.C., 92400 Courbevoie (FR)
(72) Inventor: Rousselon, Valerie, BP Chemicals S.N.C., 13117 Lavera (FR)
(74) Representative: Donné, Eddy

(56) References cited:
- EP-A- 0 229 014
- WO-A-94/02420
- GB-A- 652 339
- US-A- 2 466 530
- US-A- 3 004 987

## Description

The present invention relates to a process for reducing corrosion of aluminium or alloys thereof in contact with an aqueous or organic fluid, and particularly the use of a corrosion inhibitor in an antifreeze composition.

European Patent Application n° 0 229 014 discloses a magnetic recording medium wherein a thin magnetic metal film is formed as the magnetic layer on a non-magnetic base, and wherein a carboxylic acid perfluoroalkyl ester is coated as a lubricant on thesaid film. The lubricant may be used with rust preventives which can be selected amongst a lot of products such as heterocyclic compounds containing nitrogen, e.g. allantoin.

British Patent Application n° 652,339 discloses detergent compositions containing calcium-sequestering phosphates which generally exhibit the undesirable property of causing the formation of a film of tarnish on the surface of some metals and alloys e.g. copper and brass. The detergent compositions comprise amongst various tarnish inhibitors, allantoin, in a proportion of 0.001 to 5% by weight calculated on said phosphates.

Allantoin in particular is also known to be employed in cosmetic or pharmaceutical preparations, in particular as a skin conditioner or skin-protecting agent.

It has been found, surprisingly, that allantoin and derivatives thereof may be employed as corrosion inhibitor with respect to aluminium and alloys thereof.

Allantoin and the derivatives thereof employed according to the invention as corrosion inhibitors correspond to the general formula: 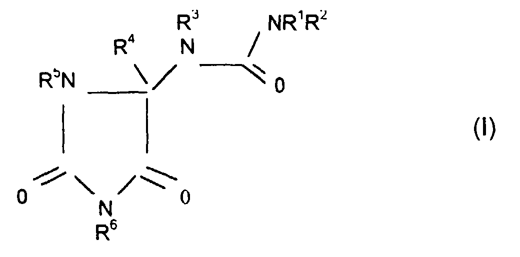 in which R¹, R², R³, R⁵ and R⁶, being identical or different, represent a hydrogen atom, an alkyl, aryl or aralkyl radical, an alkali metal or an ammonium group, and R⁴ represents a hydrogen atom or an alkyl, aryl or aralkyl radical. In particular, R¹, R², R³, R⁵ and R⁶ may be an alkyl radical containing from 1 to 6, preferably from 1 to 4, carbon atoms, for example the methyl or ethyl radical, an aryl radical containing from 6 to 12, preferably from 6 to 10, carbon atoms, for example the phenyl radical, an aralkyl radical containing from 7 to 14, preferably from 7 to 11, carbon atoms, for example the benzyl radical, or an alkali metal chosen from sodium and potassium. Also, R⁴ may be an alkyl, aryl or aralkyl radical such as those mentioned above to define R¹, R², R³, R⁵ and R⁶, and may be identical to or different from these radicals. The preferred corrosion inhibitor is allantoin, corresponding to the general formula (I) in which R¹, R², R³, R⁴, R⁵ and R⁶ represent a hydrogen atom, that is to say the following general formula:

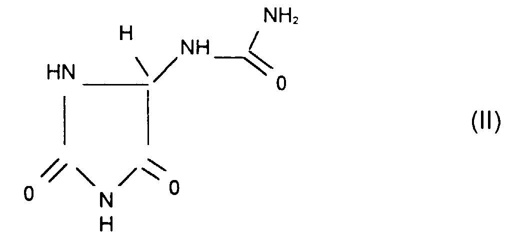

Allantoin is also known by other names, such as glyoxylic acid ureide, 5-ureidohydantoin and cordianine. Allantoin is particularly useful as a corrosion inhibitor for aluminium and alloys thereof.

Allantoin and the derivatives thereof mentioned above are products which are known per se. They may be prepared, for example, by heating dichloroacetic acid with urea, or by oxidizing uric acid with potassium permanganate in alkaline solution, or by placing allantoin or one of the hydrocarbon derivatives thereof in contact with a strong inorganic base such as sodium hydroxide or potassium hydroxide.

Allantoin and the derivatives thereof mentioned above are excellent corrosion inhibitors for aluminium and alloys thereof, in particular when they are employed in aqueous or organic fluids, for example oils such as mineral or synthetic oils, alcohols such as a glycol or a glycol ether, or boric esters of a glycol ether. They are particularly useful as corrosion inhibitors in lubricating compositions, for example lubricating oil compositions, heat-transfer-fluid compositions, for example antifreeze compositions, aqueous heat-transfer-fluid compositions, for example aqueous fluid compositions containing an antifreeze, de-icing fluid compositions used in particular in aeronautics, or hydraulic fluid compositions, for example brake fluid compositions.

The present invention also relates to the use of allantoin or one of the derivatives thereof mentioned above as aluminium corrosion inhibitor in an antifreeze composition, in a proportion which ranges from 0.01 to 5%, preferably from 0.02 to 0.5%, by weight. Thus, the antifreeze composition may contain a water-soluble liquid alcohol which lowers the freezing point, such as monoethylene glycol and/or monopropylene glycol, and a corrosion inhibitor system, the composition being characterized in that the corrosion inhibitor system comprises allantoin or one of the derivatives thereof mentioned above, in a proportion which may in particular be that mentioned above.

More particularly, the antifreeze composition and in particular the corrosion inhibitor system thereof may comprise allantoin or one of the derivatives thereof mentioned above, in combination with at least one of the following compounds:
- at least one aliphatic or aromatic monocarboxylic acid, for example a C₃ to C₁₆ acid, such as n-pentanoic acid, n-hexanoic acid, n-heptanoic acid, 2-ethylhexanoic acid, isoheptanoic acid, n-octanoic acid, benzoic acid, ortho-, meta- or para-methylbenzoic acid, ortho-, meta- or para-ethylbenzoic acid or ortho-, meta- or para-tert-butylbenzoic acid, or alternatively the alkali metal, ammonium or amine salt of one of these acids, in a proportion which may range from 0.1 to 10%, preferably from 0.5 to 5%, by weight in the antifreeze composition,
- at least one aminocarboxylic acid, for example a C₂ to C₁₆ acid, in particular an aliphatic or aromatic mono- or dicarboxylic acid, such as sarcosine, aspartic acid, glutamic acid, glycine, glycocoll, N-parahydroxyphenylaminoethanoic acid or anthranilic acid, or alternatively the alkali metal, ammonium or amine salt of one of these acids, in a proportion which may range from 0.1 to 10%, preferably from 0.5 to 5%, by weight in the antifreeze composition,
- at least one aliphatic or aromatic dicarboxylic acid, for example a C₃ to C₁₆ acid, such as malonic acid, succinic acid, fumaric acid, itaconic acid, maleic acid, muconic acid, adipic acid, glutaric acid, 2-hydroxy pentanedioic acid, azelaic acid, sebacic acid, methyleneazelaic acid, phthalic acid or one of the napthalenedicarboxylic acids, or alternatively the alkali metal, ammonium or amine salt of one of these acids, in a proportion which may range from 0.1 to 10%, preferably from 0.5 to 5%, by weight in the antifreeze composition,
- at least one triazole compound, in particular a triazole hydrocarbon compound such as an N- and/or C-substituted triazole derivative, preferably an aromatic triazole compound, for example benzotriazole or tolyltriazole, or alternatively an N-substituted benzotriazole or tolyltriazole derivative, for example that sold by Ciba under the trade name "IRGAMET 42"®, in a proportion which may range from 0.01 to 1%, preferably from 0.05 to 0.5%, by weight in the antifreeze composition,
- at least one alkali metal silicate, in particular a metasilicate of an alkali metal, for example of sodium, in particular a sodium metasilicate hydrate, in a proportion which may range from 0.01 to 1%, preferably from 0.05 to 0.5%, by weight in the antifreeze composition,
- at least one organic silane corresponding in particular to the general formula

   Si(OR⁷)₄₋ₙ(R⁸)ₙ

   in which n is an integer or fraction ranging from 1 to 3, R⁷ represents an organic radical linked to the oxygen atom via a carbon-oxygen bond, in particular an alkyl, aryl or aralkyl radical, for example a C₁ to C₁₄ radical such as the methyl, ethyl, phenyl or benzyl radical, or a hydrogen atom, or alternatively an alkali metal such as sodium or potassium, and R⁸ represents an organic radical linked to the silicon atom via a silicon-carbon bond, in particular an alkyl, aryl or aralkyl radical, for example a C₁ to C₁₄ radical such as the methyl, ethyl, phenyl or benzyl radical, or a radical corresponding to the general formula

   -CH₂CH₂CH₂-(OCH R⁹CH₂)ₘ-OR¹⁰

   in which m is an integer or fraction which may range from 1 to 20, preferably from 3 to 10, R⁹ represents a hydrogen atom or an alkyl, aryl or aralkyl radical, for example a C₁ to C₁₀ radical such as the methyl or ethyl radical, and R¹⁰ represents an alkyl, aryl or aralkyl radical, for example a C₁ to C₁₀ radical such as the methyl or ethyl radical, or a radical corresponding to the general formula

   -(CH₂)ₚ-Z

   in which p is an integer which may range from 1 to 10 and Z is a polar function such as a phosphonate, an amine, a sulphate, a carboxylate, a diazole or an anhydride such as succinic anhydride, for example the silane "Y 5560"® sold by OSI Specialities, or "GF 20"® sold by Wacker, or "Q1 6083"® sold by Dow Corning, or "SJ 35/4"® sold by Goldschmidt, in a proportion which may range from 0.01 to 2%, preferably from 0.02 to 1%, in the antifreeze composition,
- at least one alkali metal or alkaline-earth metal or ammonium borate, in particular sodium tetraborate decahydrate, also referred to as "Borax", in a proportion which may range from 0.5 to 5% by weight in the antifreeze composition,
- at least one 1,3-diazole chosen from imidazole, benzimidazole and imidazoline or one of the hydrocarbon derivatives thereof, in particular imidazole or N- and/or C-substituted imidazole derivatives, in particular the alkyl, aryl or aralkyl derivatives, for example C₁ to C₁₄ derivatives such as the methyl, ethyl, phenyl or benzyl N- and/or C-substituted imidazole derivatives, or benzimidazole or N- and/or C-substituted benzimidazole derivatives, in particular the alkyl, aryl or aralkyl derivatives, for example C₁ to C₁₄ derivatives such as the methyl, ethyl, phenyl or benzyl N- and/or C-substituted benzimidazole derivatives, or imidazoline or N- and/or C-substituted imidazoline derivatives, in particular the alkyl, aryl or aralkyl derivatives, for example C₁ to C₁₄ derivatives such as the methyl, ethyl, phenyl or benzyl N- and/or C-substituted imidazoline derivatives, preferably benzimidazole, in a proportion which may range from 0.01 to 2%, preferably from 0.02 to 1%, by weight in the antifreeze composition,
- at least one molybdate of ammonium or of an alkali metal or alkaline-earth metal such as sodium, potassium or magnesium, in particular sodium molybdate dihydrate, in a proportion which may range from 0.01 to 1%, preferably from 0.05 to 0.5%, by weight in the antifreeze composition,
- at least one nitrate or nitrite of an alkali metal or alkaline-earth metal such as sodium, potassium or magnesium, in a proportion which may range from 0.01 to 1%, preferably from 0.05 to 0.5%, by weight in the antifreeze composition, or
- at least one cyclic or acyclic imide, which may correspond to the general formulae 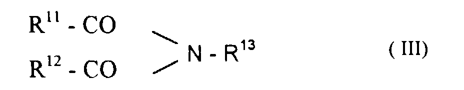 or 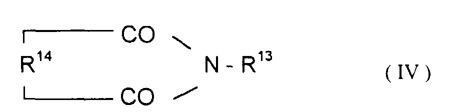 in which R¹¹ and R¹², being identical or different, represent an alkyl, aryl or aralkyl radical, for example a C₁ to C₁₄ radical such as the methyl, ethyl, phenyl or benzyl radical, R¹³ represents a hydrogen atom or an alkyl, aryl or aralkyl radical, for example a C₁ to C₁₄ radical such as the methyl, ethyl, phenyl or benzyl radical, and R¹⁴ represents a divalent hydrocarbon radical, in particular a linear or branched alkylene radical, for example a C₂ to C₈ radical such as the ethylene radical, or a divalent aryl radical, for example a C₆ to C₁₄ radical such as an ortho-phenylene radical, or an aralkylene radical, for example a C₈ to C₁₆ radical such as the divalent styrene radical, preferably succinimide or phthalimide, in a proportion which may range from 0.01 to 2%, preferably from 0.05 to 1%, by weight in the antifreeze composition.

Other additives may be added to the antifreeze composition and, in particular, the corrosion inhibitor system thereof comprising allantoin or one of the derivatives thereof mentioned above: tungstates or phosphates of an alkali metal such as sodium or potassium, phosphates, amines, polyols, for example C₅ to C₁₂ polyols containing from 5 to 12 alcohol functions, such as sorbitol, xylitol, mannitol or sucrose.

The antifreeze composition may also comprise an inorganic base such as sodium hydroxide or potassium hydroxide, which is intended in particular to neutralize the allantoin or one of the derivatives thereof and the acids which may be present in the composition, and to form the corresponding salts in stoichiometric amounts.

The antifreeze composition may also comprise antifoaming, anti-encrustation or anti-scaling agents, or stabilizers or sequestering agents for alkaline-earth metals or for other metal ions, in particular divalent ions.

The antifreeze composition generally contains, as essential component or component in weight majority, a water-soluble liquid alcohol, which makes it possible to lower the freezing point. The liquid alcohol is generally a glycol such as monoethylene glycol, diethylene glycol, monopropylene glycol or dipropylene glycol, or a glycol ether such as the methyl, ethyl, propyl or butyl ether of monoethylene glycol, of diethylene glycol, of monopropylene glycol or of dipropylene glycol. Monoethylene glycol and monopropylene glycol are particularly preferred.

The present invention also relates to the use of an antifreeze composition defined in claims 5 to 8 in an aqueous heat-transfer fluid having a lowered freezing point and containing water and from 10 to 90%, preferably from 25 to 65%, by weight of the antifreeze composition, the weight percentages being based on the aqueous heat-transfer fluid.

The present invention relates in addition to a process for treating an aqueous or organic fluid in order to reduce the corrosion of aluminium, or alloys thereof in contact with the fluid, by addition of a corrosion inhibitor system comprising allantoin or one of the derivatives thereof mentioned above.

The present invention also relates more particularly to a process for treating an aqueous fluid, in particular a heat-transfer fluid, containing a water-soluble liquid alcohol which lowers the freezing point, in order to reduce the corrosion of aluminium, or alloys thereof in contact with the fluid, by addition of a corrosion inhibitor system, characterized in that the corrosion inhibitor system comprises allantoin or one of the derivatives thereof mentioned above.

It has been found that allantoin or one of the derivatives thereof mentioned above has noteworthy effects as a corrosion inhibitor when it is combined in particular with one or more other products of a corrosion inhibitor system in an antifreeze composition. Thus, the best combinations in a corrosion inhibitor system of an antifreeze composition are the following:
* Antifreeze composition (A) comprising:
   (1) allantoin or one of the derivatives thereof mentioned above, in particular in a proportion of from 0.01 to 5%, preferably of from 0.02 to 0.5%, by weight,
   (2) one or at least two aliphatic or aromatic dicarboxylic acids, for example C₃ to C₁₆ acids such as sebacic acid, adipic acid or succinic acid, or the alkali metal, ammonium or amine salt of one or of at least two of these acids, in particular in a proportion for each of them of from 0.1 to 10%, preferably of from 0.5 to 5%, by weight, and
   (3) a triazole such as benzotriazole or tolyltriazole, in particular in a proportion of from 0.01 to 1%, preferably of from 0.05 to 0.5%, by weight.
* Antifreeze composition (B) comprising:
   (1) allantoin or one of the derivatives thereof mentioned above, in particular in a proportion of from 0.01 to 5%, preferably of from 0.02 to 0.5%, by weight,
   (2) one or at least two aliphatic or aromatic dicarboxylic acids, for example C₃ to C₁₆ acids such as sebacic acid, adipic acid or succinic acid, or the alkali metal, ammonium or amine salt of one or of at least two of these acids, in particular in a proportion for each of them of from 0.1 to 10%, preferably of from 0.5 to 5%, by weight,
   (3) a 1,3 - diazole chosen from imidazole, benzimidazole and imidazoline or one of the hydrocarbon derivatives thereof, preferably benzimidazole, in particular in a proportion of from 0.01 to 2 %, preferably of from 0.02 to 1 %, by weight, and
   (4) a triazole such as benzotriazole or tolyltriazole, in particular in a proportion of from 0.01 to 1%, preferably of from 0.05 to 0.5%, by weight.
* Antifreeze composition (C) comprising:
   (1) allantoin or one of the derivatives thereof mentioned above, in particular in a proportion of from 0.01 to 5%, preferably of from 0.02 to 0.5%, by weight,
   (2) at least one aliphatic monocarboxylic acid, for example a C₃ to C₁₆ acid, such as n-heptanoic acid or 2-ethylhexanoic acid, or the alkali metal, ammonium or amine salt of at least one of these acids, in particular in a proportion of from 0.1 to 10%, preferably of from 0.5 to 5%, by weight,
   (3) at least one aliphatic or aromatic dicarboxylic acid, for example a C₃ to C₁₆ acid, such as sebacic acid, adipic acid or succinic acid, or the alkali metal, ammonium or amine salt of at least one of these acids, in particular in a proportion of from 0.1 to 10%, preferably of from 0.5 to 5%, by weight, and
   (4) a triazole such as benzotriazole or tolyltriazole, in particular in a proportion of from 0.01 to 1%, preferably of from 0.05 to 0.5%, by weight.
* Antifreeze composition (D) comprising:
   (1) allantoin or one of the derivatives thereof mentioned above, in particular in a proportion of from 0.01 to 5%, preferably of from 0.02 to 0.5%, by weight,
   (2) at least one aromatic monocarboxylic acid, for example a C₆ to C₁₄ acid, such as benzoic acid, or the alkali metal, ammonium or amine salt of at least one of these acids, in particular in a proportion of from 0.1 to 10%, preferably of from 0.5 to 5%, by weight,
   (3) at least one aliphatic or aromatic dicarboxylic acid, for example a C₃ to C₁₆ acid, such as sebacic acid, adipic acid or succinic acid, or the alkali metal, ammonium or amine salt of at least one of these acids, in particular in a proportion of from 0.1 to 10%, preferably of from 0.5 to 5%, by weight, and
   (4) a triazole such as benzotriazole or tolyltriazole, in particular in a proportion of from 0.01 to 1%, preferably of from 0.05 to 0.5%, by weight,
   (5) optionally, a molybdate of an alkali metal or alkaline-earth metal or ammonium, in particular sodium molybdate, in particular in a proportion of from 0.01 to 1%, preferably of from 0.05% to 0.5%, by weight, and
   (6) optionally, an alkali metal or alkaline-earth metal nitrate, in particular sodium nitrate, in particular in a proportion of from 0.01 to 1%, preferably of from 0.05 to 0.5%, by weight.
* Antifreeze composition (E) comprising the constituents (1), (2), (3) and (4) of the antifreeze composition (D) and also:
   (5) an alkali metal silicate such as a sodium metasilicate hydrate, in particular in a proportion of from 0.01 to 1%, preferably of from 0.05 to 0.5%, by weight,
   (6) an organic silane as described above, in particular in a proportion of from 0.01 to 2%, preferably of from 0.02 to 1%, by weight, and
   (7) an alkali metal or alkaline-earth metal or ammonium borate, in particular sodium tetraborate decahydrate, in particular in a proportion of from 0.5 to 5% by weight.
* Antifreeze composition (F) comprising:
   (1) allantoin or one of the derivatives thereof mentioned above, in particular in a proportion of from 0.01 to 5%, preferably of from 0.02 to 0.5%, by weight,
   (2) an alkali metal or alkaline-earth metal or ammonium borate, in particular sodium tetraborate decahydrate, in particular in a proportion of from 0.5 to 5% by weight,
   (3) an alkali metal silicate such as sodium metasilicate hydrate, in particular in a proportion of from 0.01 to 1%, preferably of from 0.05 to 0.5%, by weight,
   (4) an organic silane as described above, in particular in a proportion of from 0.01 to 2%, preferably of from 0.02 to 1%, by weight, and
   (5) a triazole such as benzotriazole or tolyltriazole, in particular in a proportion of from 0.01 to 1%, preferably of from 0.05 to 0.5%, by weight, and
   (6) optionally, an alkali metal or alkaline-earth metal nitrate, in particular sodium nitrate, in particular in a proportion of from 0.01 to 1%, preferably of from 0.05 to 0.5%, by weight.
* Antifreeze composition (G) free of alkali metal silicate and comprising:
   (1) allantoin or one of the derivatives thereof mentioned above, in particular in a proportion of from 0.01 to 5%, preferably of from 0.02 to 0.5%, by weight,
   (2) one or at least two aliphatic or aromatic mono- and/or dicarboxylic acids, for example C₃ to C₁₆ acids, such as n-heptanoic acid, 2-ethylhexanoic acid, sebacic acid, adipic acid, succinic acid or benzoic acid, or the alkali metal, ammonium or amine salt of one or of at least two of these acids, in particular in a proportion for each of them of from 0.1 to 10%, preferably of from 0.5 to 5%, by weight, and
   (3) an organic silane as described above, in particular in a proportion of from 0.01 to 2%, preferably of from 0.02 to 1%, by weight.
* Antifreeze composition (H) comprising:
   (1) allantoin or one of the derivatives thereof mentioned above, in particular in a proportion of from 0.01 to 5%, preferably of from 0.02 to 0.5%, by weight,
   (2) one or at least two aliphatic or aromatic mono- and/or dicarboxylic acids, for example C₃ to C₁₆ acids, such as n-heptanoic acid, 2-ethylhexanoic acid, sebacic acid, adipic acid, succinic acid or benzoic acid, or the alkali metal, ammonium or amine salt of one or of at least two of these acids, in particular in a proportion for each of them of from 0.1 to 10%, preferably of from 0.5 to 5%, by weight, and
   (3) a polyol, for example a C₅ to C₁₂ polyol containing from 5 to 12 alcohol functions, such as sorbitol, in particular in a proportion of from 0.01 to 5%, preferably of from 0.05 to 2%, by weight.
* Antifreeze composition (I) comprising:
   (1) allantoin or one of the derivatives thereof mentioned above, in particular in a proportion of from 0.01 to 5%, preferably of from 0.02 to 0.5%, by weight,
   (2) an alkali metal or amine phosphate, in particular potassium phosphate, in particular in a proportion of from 0.1 to 10%, preferably of from 0.5 to 5%, by weight, and
   (3) a triazole such as benzotriazole or tolyltriazole, in particular in a proportion of from 0.01 to 1%, preferably of from 0.05 to 0.5%, by weight, or alternatively sodium or potassium mercaptobenzothiazolate, in particular in a proportion of from 0.01 to 1%, preferably of from 0.05 to 0.5%, by weight, and
   (4) optionally, an ammonium or an alkali metal or alkaline-earth metal molybdate, in particular sodium molybdate, in particular in a proportion of from 0.01 to 1%, preferably of from 0.05 to 0.5%, by weight, and/or an alkali metal or alkaline-earth metal nitrate, in particular sodium nitrate, in particular in a proportion of from 0.01 to 1%, preferably of from 0.05 to 0.5%, by weight.
* Antifreeze composition (J) comprising the constituents of the composition described in the example of European patent No. 0,352,120 with, in addition, allantoin or one of the derivatives thereof mentioned above, in particular in a proportion of from 0.01 to 5%, preferably of from 0.02 to 0.5%, by weight.
* Antifreeze composition (K) free of phosphate, or amine or nitrite, and comprising:
   (1) allantoin or one of the derivatives thereof mentioned above, in particular in a proportion of from 0.01 to 5%, preferably of from 0.02 to 0.5%, by weight,
   (2) at least one aliphatic monocarboxylic acid, for example a C₃ to C₁₆ acid, such as n-heptanoic acid or 2-ethylhexanoic acid, in particular in a proportion of from 0.1 to 10%, preferably of from 0.5 to 5%, by weight,
   (3) an alkali metal or alkaline-earth metal or ammonium borate, in particular sodium tetraborate decahydrate, in particular in a proportion of from 0.5 to 5% by weight, and
   (4) a triazole such as benzotriazole or tolyltriazole, in particular in a proportion of from 0.01 to 1%, preferably of from 0.05 to 0.5%, by weight.

The weight percentages mentioned above are based on the antifreeze composition, it being understood that the composition may contain other additives.

Allantoin and the derivatives thereof mentioned above are excellent corrosion inhibitors with respect to aluminium and alloys thereof. They significantly reduce the corrosion of aluminium by heat transfer. In internal combustion engines, it is increasingly necessary to protect components such as the metal surfaces made of aluminium which constitute the cylinders in which the explosions take place. The metal surfaces may locally reach very high temperatures, for example of from 150 to 180°C, and may be subject to corrosion phenomena by heat transfer. The present invention thus makes it possible to improve considerably the corrosion-protection of these internal combustion engine components.

The examples which follow illustrate the present invention.

### Example 1

An antifreeze composition based on monoethylene glycol (MEG) is prepared, which composition contains by weight:

| | (% by weight) |
|---|---|
| MEG | 94.125 |
| sebacic acid | 2.000 |
| succinic acid | 1.675 |
| sodium hydroxide | 1.950 |
| tolyltriazole | 0.200 |
| allantoin | 0.050 |

The following measurements are made on the antifreeze composition:
- pH according to the method ASTM-D-1287 (at a concentration of 33% by volume in aqueous solution): 8.05
- Reserve Alkalinity (RA) according to the method ASTM-D-1121: 12.75 ml N/10 HCl.
- Corrosion test by heat transfer in the presence of an aluminium alloy according to NFR method 15-602-8:

| | |
|---|---|
| pH before the test = | 8.1 |
| pH after the test = | 8.2 |
| rate of corrosion = | -0.1 mg/cm²/week |

A comparative antifreeze composition is prepared for comparison, which composition is free of allantoin and contains by weight:

| | (% by weight) |
|---|---|
| MEG | 94.175 |
| sebacic acid | 2.000 |
| succinic acid | 1.675 |
| sodium hydroxide | 1.950 |
| tolyltriazole | 0.200 |

The following measurements are made on the comparative antifreeze composition:
- pH according to the method ASTM-D-1287 (at a concentration of 33% by volume in aqueous solution): 8.1
- Reserve Alkalinity (RA) according to the method ASTM-D-1121: 12.5 ml N/10 HCl
- Corrosion test by heat transfer in the presence of an aluminium alloy according to NFR method 15-602-8:

| | |
|---|---|
| pH before the test = | 8.1 |
| pH after the test = | 7.7 |
| rate of corrosion = | -0.5 mg/cm²/week |

### Example 2

A MEG-based antifreeze composition is prepared, which composition contains by weight:

| | (% by weight) |
|---|---|
| MEG | 94.075 |
| sebacic acid | 1.675 |
| succinic acid | 2.000 |
| sodium hydroxide | 1.950 |
| tolyltriazole | 0.200 |
| benzimidazole | 0.050 |
| allantoin | 0.050 |

The following measurements are made on the antifreeze composition:
- pH according to the method ASTM-D-1287 (at a concentration of 33% by volume in aqueous solution): 8.2
- Reserve alkalinity (RA) according to the method ASTM-D-1121: 13.9 ml N/10 HCl
- Test of heat resistance and corrosion resistance in the presence of an aluminium alloy at high temperature, according to the PSA method (Peugeot S.A.)-D 55 5345 (April 1991) over 500 hours instead of 240 hours:

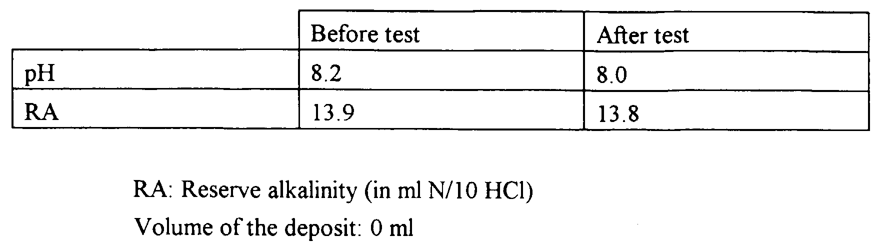

A comparative antifreeze composition is prepared for comparison, which composition is free of allantoin and contains by weight:

| | (% by weight) |
|---|---|
| MEG | 94.125 |
| sebacic acid | 1.675 |
| succinic acid | 2.000 |
| sodium hydroxide | 1.950 |
| tolyltriazole | 0.200 |
| benzimidazole | 0.050 |

The following measurements are made on the comparative antifreeze composition:
- pH according to the method ASTM-D-1287 (at a concentration of 33% by volume in aqueous solution): 8.0
- Reserve alkalinity (RA) according to the method ASTM-D-1121: 13.0 ml N/10 HCl
- Test of heat resistance and corrosion resistance in the presence of an aluminium alloy at high temperature, according to the method PSA-D 55 5345 (April 1991) over 500 hours instead of 240 hours:

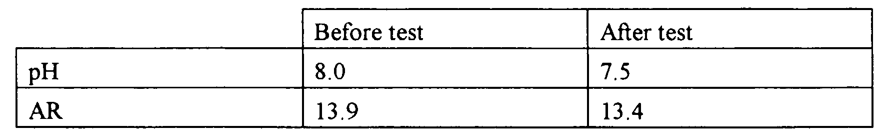

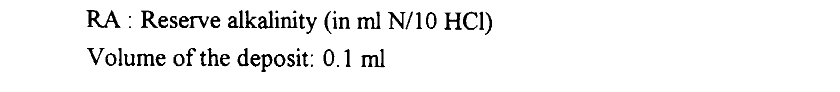

### Example 3 (only corrosion data for aluminium are according to the invention)

A MEG-based antifreeze composition is prepared, which composition contains by weight:

| | (% by weight) |
|---|---|
| MEG | 96.255 |
| sodium tetraborate·10 H₂O | 3.000 |
| sodium metasilicate·5 H₂O | 0.200 |
| sodium nitrate | 0.200 |
| "GF 20"® ⁽¹⁾ (silane) | 0.050 |
| tolyltriazole | 0.025 |
| sodium hydroxide | 0.070 |
| allantoin | 0.200 |

| | |
|---|---|
| ⁽¹⁾manufactured by Wacker | |

The following measurements are made on the antifreeze composition:
- pH according to the method ASTM-D-1287 (at a concentration of 33% by volume in aqueous solution): 7.9
- Reserve alkalinity (RA) according to the method ASTM-D-1121: 21.0 ml N/10 HCl
- Anti-corrosive properties according to the glassware corrosion test according to NFR method 15-602-7:

| metal/alloy | weight variation (mg) |
|---|---|
| copper | -2.9 |
| solder | -0.1 |
| brass | -2.3 |
| steel | +1.6 |
| cast iron | +1.5 |
| aluminium | +1.2 |

- Test of corrosion by heat transfer in the presence of an aluminium alloy according to NFR method 15-602-8:
rate of corrosion: -0.1 mg/cm²/week

A comparative antifreeze composition is prepared for comparison, which composition is free of allantoin and contains by weight:

| | (% by weight) |
|---|---|
| MEG | 96.455 |
| sodium tetraborate·10 H₂O | 3.000 |
| sodium metasilicate·5 H₂O | 0.200 |
| sodium nitrate | 0.200 |
| « GF 20 »® ⁽¹⁾ (silane) | 0.050 |
| tolyltriazole | 0.025 |
| sodium hydroxide | 0.070 |

| | |
|---|---|
| ⁽¹⁾manufactured by Wacker | |

The following measurements are made on the comparative antifreeze composition:
- pH according to the method ASTM-D-1287 (at a concentration of 33% by volume in aqueous solution): 7.8
- Reserve alkalinity (RA) according to the method ASTM-D-1121: 21.4 ml N/10 HCl
- Anti-corrosive properties according to the glassware corrosion test according to NFR method 15-602-7:

| metal/alloy | weight variation (mg) |
|---|---|
| copper | -2.9 |
| solder | -2.8 |
| brass | -1.8 |
| steel | -0.9 |
| cast iron | -0.1 |
| aluminium | -8.2 |

- Test of corrosion by heat transfer in the presence of an aluminium alloy according to NFR method 15-602-8:
rate of corrosion: -0.5 mg/cm²/week

## Claims

1. Process for reducing corrosion of aluminium or alloys thereof in contact with an aqueous or organic fluid, comprising adding to the fluid a corrosion inhibitor chosen from allantoin and the derivatives thereof corresponding to the general formula 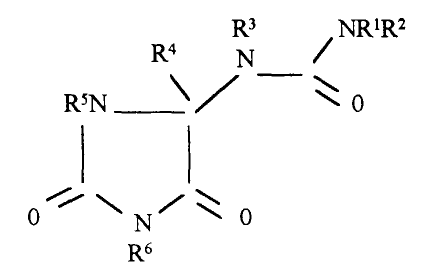 in which R¹, R², R³, R⁵ and R⁶, being identical or different, represent a hydrogen atom, an alkyl, aryl or aralkyl radical, an alkali metal or an ammonium group, and R⁴ represents a hydrogen atom or an alkyl, aryl or aralkyl radical.

2. Process according to Claim 1, characterized in that it comprises adding allantoin to the fluid.

3. Process according to Claim 1, characterized in that R¹, R², R³, R⁵ and R⁶ represent a hydrogen atom, a C₁ to C₆ alkyl radical, a C₆ to C₁₂ aryl radical, a C₇ to C₁₄ aralkyl radical, sodium or potassium.

4. Process according to any one of Claims 1 to 3, characterized in that the fluid is a composition selected amongst lubricant, heat-transfer-fluid, antifreeze, de-icing fluid, hydraulic fluid and brake-fluid compositions.

5. Use of allantoin or the derivatives thereof corresponding to the general formula 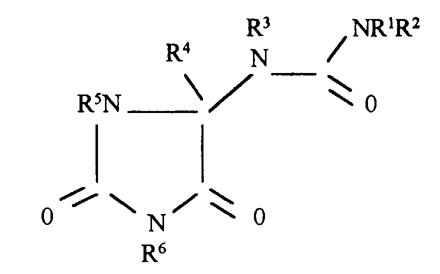 in which R¹, R², R³, R⁵ and R⁶, being identical or different, represent a hydrogen atom, an alkyl, aryl or aralkyl radical, an alkali metal or an ammonium group, and R⁴ represents a hydrogen atom or an alkyl, aryl or aralkyl radical, as aluminium corrosion inhibitor, in a proportion of from 0.01 to 5% by weight in an antifreeze composition.

6. Use according to Claim 5, characterized in that R¹, R², R³, R⁵ and R⁶ represent a hydrogen atom, a C₁ to C₆ alkyl radical, a C₆ to C₁₂ aryl radical, a C₇ to C₁₄ aralkyl radical, sodium or potassium.

7. Use according to Claim 5 or 6, characterized in that the aluminium corrosion inhibitor is present in a proportion of from 0.02 to 0.5% by weight in the antifreeze composition.

8. Use according any one of Claims 5 to 7, characterized in that the antifreeze composition also contains at least one of the following compounds :
- at least one aliphatic or aromatic monocarboxylic acid, or the alkali metal, ammonium or amine salt of the said acid,
- at least one aminocarboxylic acid, or the alkali metal, ammonium or amine salt of the said acid,
- at least one aliphatic or aromatic dicarboxylic acid, or the alkali metal, ammonium or amine salt of the said acid,
- at least one triazole compound,
- at least one alkali metal silicate,
- at least one organic silane,
- at least one alkali metal or alkaline-earth metal or ammonium borate,
- at least one 1,3-diazole chosen from imidazole, benzimidazole and imidazoline, or one of the hydrocarbon derivatives thereof,
- at least one alkali metal or alkaline-earth metal or ammonium molybdate,
- at least one alkali metal or alkaline-earth metal nitrate or nitrite, or
- at least one cyclic or acyclic imide.

9. Use of the antifreeze composition defined in any one of Claims 5 to 8 in an aqueous heat-transfer fluid having a lowered freezing point and containing water and from 10 to 90% by weight of the said antifreeze composition.

## Patentansprüche

1. Verfahren zur Korrosionsverminderung mit einer wässerigen oder organischen Flüssigkeit in Kontakt stehendem Aluminium oder Legierungen davon, umfassend Zugabe eines Korrosionsinhibitors, ausgewählt aus Allantoin und den Derivaten davon, entsprechend der allgemeinen Formel 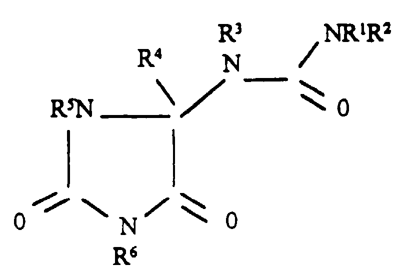 worin R¹, R², R³, R⁵ und R⁶, die gleich oder verschieden sind, ein Wasserstoffatom, einen Alkyl-, Aryl- oder Aralkylrest, ein Alkalimetall oder eine Ammoniumgruppe wiedergeben, und R⁴ ein Wasserstoffatom oder einen Alkyl-, Aryl- oder Aralkylrest wiedergibt,
zu der Flüssigkeit.

2. Verfahren nach Anspruch 1, dadurch gekennzeichnet, daß es die Zugabe von Allantoin zu der Flüssigkeit umfaßt.

3. Verfahren nach Anspruch 1, dadurch gekennzeichnet, daß R¹, R², R³, R⁵ und R⁶ ein Wasserstoffatom, einen C₁-C₆-Alkylrest, einen C₆-C₁₂-Arylrest, einen C₇-C₁₄-Aralkylrest, Natrium oder Kalium wiedergeben.

4. Verfahren nach einem der Ansprüche 1 bis 3, dadurch gekennzeichnet, daß die Flüssigkeit eine aus Schmiermittel-, Wärmeübertragungsflüssigkeits-, Frostschutz-, Enteisungsflüssigkeits-, hydraulischen Flüssigkeits- und Bremsflüssigkeits-Zusammensetzungen ausgewählte Zusammensetzung darstellt.

5. Verwendung von Allantoin oder den Derivaten davon entsprechend der allgemeinen Formel 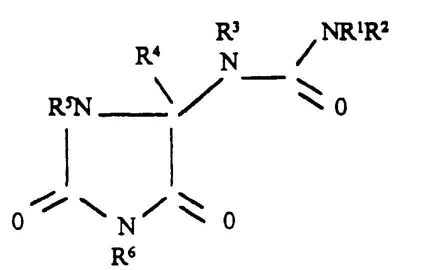 worin R¹, R², R³, R⁵ und R⁶, die gleich oder verschieden sind, ein Wasserstoffatom, einen Alkyl-, Aryl- oder Aralkylrest, ein Alkalimetall oder eine Ammoniumgruppe wiedergeben, und R⁴ ein Wasserstoffatom oder einen Alkyl-, Aryl- oder Aralkylrest wiedergibt, als Aluminiumkorrosionsinhibitor in einem Anteil von 0,01 bis 5 Gewichtsprozent in einem Frostschutzmittel.

6. Verwendung nach Anspruch 5, dadurch gekennzeichnet, daß R¹, R², R³, R⁵ und R⁶ ein Wasserstoffatom, einen C₁-C₆-Alkylrest, einen C₆-C₁₂-Arylrest, einen C₇-C₁₄-Aralkylrest, Natrium oder Kalium wiedergeben.

7. Verwendung nach Anspruch 5 oder 6, dadurch gekennzeichnet, daß der Aluminiumkorrosionsinhibitor in dem Frostschutzmittel in einem Anteil von 0,02 bis 0,5 Gewichtsprozent vorliegt.

8. Verwendung nach einem der Ansprüche 5 bis 7, dadurch gekennzeichnet, daß das Frostschutzmittel ebenfalls mindestens eine der nachstehenden Verbindungen enthält:
- mindestens eine aliphatische oder aromatische Monocarbonsäure oder das Alkalimetall-, Ammonium- oder Aminsalz der Säure,
- mindestens eine Aminocarbonsäure oder das Alkalimetall-, Ammonium- oder Aminsalz der Säure,
- mindestens eine aliphatische oder aromatische Dicarbonsäure oder das Alkalimetall-, Ammonium- oder Aminsalz der Säure,
- mindestens eine Triazolverbindung,
- mindestens ein Alkalimetallsilikat,
- mindestens ein organisches Silan,
- mindestens ein Alkalimetall- oder Erdalkalimetall- oder Ammoniumborat,
- mindestens ein 1,3-Diazol, ausgewählt aus Imidazol, Benzimidazol und Imidazolin, oder eines der Kohlenwasserstoffderivate davon,
- mindestens ein Alkalimetall- oder Erdalkalimetall- oder Ammoniummolybdat,
- mindestens ein Alkalimetall- oder Erdalkalimetallnitrat oder -nitrit, oder
- mindestens ein cyclisches oder acyclisches Imid.

9. Verwendung des in einem der Ansprüche 5 bis 8 definierten Frostschutzmittels in einer wäßrigen Wärmeübertragungsflüssigkeit, die einen erniedrigten Gefrierpunkt aufweist und Wasser und 10 bis 90 Gewichtsprozent des Frostschutzmittels enthält.

## Revendications

1. Procédé pour réduire la corrosion de l'aluminium ou de ses alliages en contact avec un fluide aqueux ou organique, comprenant l'addition au fluide d'un inhibiteur de corrosion choisi entre l'allantoïne et ses dérivés, répondant à la formule générale 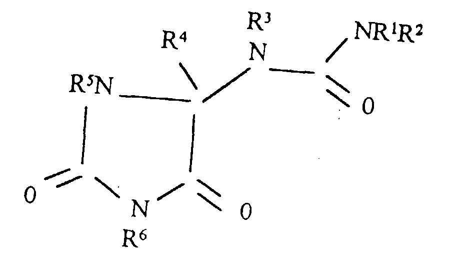 dans laquelle R¹, R², R³, R⁵ et R⁶, qui sont identiques ou différents, représentent un atome d'hydrogène, un radical alkyle, aryle ou aralkyle, un métal alcalin ou un groupe ammonium ; et R⁴ représente un atome d'hydrogène ou un radical alkyle, aryle ou aralkyle.

2. Procédé suivant la revendication 1, caractérisé en ce qu'il comprend l'addition d'allantoïne au fluide.

3. Procédé suivant la revendication 1, caractérisé en ce que R¹, R², R³, R⁵ et R⁶ représentent un atome d'hydrogène, un radical alkyle en C₁ à C₆, un radical aryle en C₆ à C₁₂, un radical aralkyle en C₇ à C₁₄, le sodium ou le potassium.

4. Procédé suivant l'une quelconque des revendications 1 à 3, caractérisé en ce que le fluide est une composition choisie entre des compositions de lubrifiants, de fluides de transfert de chaleur, des compositions antigel, de fluides de dégivrage, de fluides hydrauliques et de fluides de circuits de freinage.

5. Utilisation de l'allantoïne ou de ses dérivés répondant à la formule générale 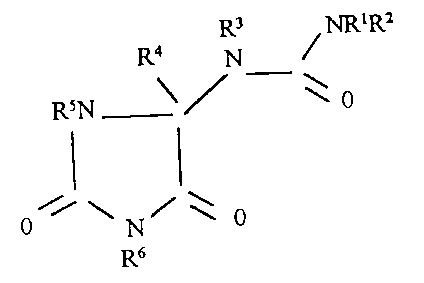 dans laquelle R¹, R², R³, R⁵ et R⁶, qui sont identiques ou différents, représentent un atome d'hydrogène, un radical alkyle, aryle ou aralkyle, un métal alcalin ou un groupe ammonium, et R⁴ représente un atome d'hydrogène ou un radical alkyle, aryle ou aralkyle, comme inhibiteur de corrosion de l'aluminium, en une proportion de 0,01 à 5 % en poids dans une composition antigel.

6. Utilisation suivant la revendication 5, caractérisée en ce que R¹, R², R³, R⁵ et R⁶ représentent un atome d'hydrogène, un radical alkyle en C₁ à C₆, un radical aryle en C₆ à C₁₂, un radical aralkyle en C₇ à C₁₄, le sodium ou le potassium.

7. Utilisation suivant la revendication 5 ou 6, caractérisée en ce que l'inhibiteur de corrosion de l'aluminium est prévu en une proportion de 0,02 à 0,5 % en poids dans la composition antigel.

8. Utilisation suivant l'une quelconque des revendications 5 à 7, caractérisée en ce que la composition antigel contient également au moins un des composés suivants :
- au moins un acide monocarboxylique aliphatique ou aromatique, ou le sel de métal alcalin, d'ammonium ou d'amine de cet acide,
- au moins un acide aminocarboxylique, ou le sel de métal alcalin, d'ammonium ou d'amine de cet acide,
- au moins un acide dicarboxylique aliphatique ou aromatique, ou le sel de métal alcalin, d'ammonium ou d'amine de cet acide,
- au moins un dérivé de triazole,
- au moins un silicate de métal alcalin,
- au moins un silane organique,
- au moins un borate de métal alcalin, de métal alcalino-terreux ou d'ammonium,
- au moins un 1,3-diazole choisi entre l'imidazole, le benzimidazole et l'imidazoline, ou un de leurs dérivés hydrocarbonés,
- au moins un molybdate de métal alcalin, de métal alcalino-terreux ou d'ammonium,
- au moins un nitrate ou nitrite de métal alcalin ou de métal alcalino-terreux, ou
- au moins un imide cyclique ou acyclique.

9. Utilisation de la composition antigel répondant à la définition suivant l'une quelconque des revendications 5 à 8 dans un fluide aqueux de transfert de chaleur ayant un point de congélation abaissé et contenant de l'eau et une quantité de 10 à 90 % en poids de la composition antigel.
